# EUROPEAN PATENT APPLICATION

(11) **EP 4 575 845 A1**
(43) Date of publication of application: **25.06.2025**
(21) Application number: 23218325.1
(22) Date of filing: 19.12.2023
(51) Int. Cl.: G06F 18/214, G06F 18/21, G06N 3/0985, G06V 10/774, G06V 10/776

(54) **DATASET AUGMENTATION**

(71) Applicant: Helsing GmbH, 81671 Munich (DE)
(72) Inventor: BITEN, Ali Furkan, 81671 Munich (DE); KETATA, Mohamed Amine, 81671 Munich (DE); KOUSKOURIDAS, Rigas, 81671 Munich (DE); JAIN, Himalaya, 81671 Munich (DE)
(74) Representative: Rummler, Felix

(57) **Abstract**

According to an aspect of the current invention, a computer-implemented method for generating a training dataset for training a machine learning, ML, model, the method comprising: determining an initial training dataset; determining a plurality of augmentation functions; applying each of the augmentation functions to the initial training dataset to obtain a plurality of augmented training datasets; applying a pre-trained ML model to each of the plurality of augmented training datasets to generate a plurality of feature vectors, and a feature vector of the initial training dataset; comparing the feature vectors of each of the augmented training datasets with feature vectors of the initial training dataset; based on the comparison, selecting at least one of the augmentation function for augmenting the initial training data to generate training data for training the ML model.

## Description

### Field

The present disclosure generally relates to dataset augmentation. In particular, the present disclosure relates to methods, systems, and devices for determining the augmentation of a training dataset for machine learning processes.

### Background

Data augmentation is a process for generating several slightly modified copies of an initial training dataset. The datasets that result from data augmentation, referred here to as augmented datasets, are useful in Machine Learning (ML) because they provide ways to enrich training datasets in domains where data is difficult and/or expensive to collect. Furthermore, augmented data is useful for controlling the training process by reducing over-fitting, speeding up convergence, and closing shortcuts that may develop during training.

The process of data augmentation may be performed automatically via data augmentation functions. These functions, which are sometime called policies, include data transformations that transform individual data points in the training dataset in new data points that may be added to the training dataset. In the field of image processing, where data points may represent an image, examples of augmentation functions may include image rotation, translation, shearing or color adjustment of existing image data.

In the exemplary case of image rotation, an image in the training dataset may be rotated of any number of degrees. Thus, an augmentation function may be characterized by a set of data transformations and by any number of hyperparameters that control the data transformations.

Although, as discussed above, data augmentation may have advantages, some augmentations may prove more useful than others. Therefore, the challenge is to determine the "best", or anyway good augmentation functions, that may significantly improve model performance. The problem of finding the best augmentation functions for a given dataset may be reduced to a search in the space of all possible augmentation functions. This search may be performed by: (i) applying each and every possible augmentation function to the same initial training dataset, (ii) training an ML model on the resulting plurality of augmented datasets, and (iii) validating the resulting plurality of ML models using a validation dataset to associate an accuracy value with the trained ML models and thereby evaluating the quality of the training process.

However, the search space of all possible augmentation functions tends to grow prohibitively large to the point of rendering the search of the best augmentation functions extremely costly or technically unfeasible. Some attempts have been made to manage the size of the search space for example by using reinforcement learning to improve the selection of augmentation functions, and recurrent neural networks to verify the quality of the augmentations. Nevertheless, the training multiple models during search is computationally very expensive and unfeasible in most datasets.

Alternatively, there have been attempts to redefine the problem to a reduced search space by selecting augmentation functions by sampling the reduced search space. These approaches may be fast in some specific conditions. However, a search based on sampling may be unsuited when the number of hyperparameters, and range of hyperparameters results in a search space that is too large to be sampled effectively.

What is required are methods to augment training datasets that limit the amount of search and avoid model training during search. The required methods should be fast, but they should also provide control over the hyperparameters, provide ways to measure the quality of the generated augmentations, and these methods should also be reproducible.

### Summary of the Invention

The present invention is defined in the independent claims. The dependent claims recite selected optional features. In the following, each of the described methods, systems, apparatuses, examples, and aspects, which do not fully correspond to the invention as defined in the claims is thus not according to the invention and is, as well as the whole following description, present for illustration purposes only or to highlight specific aspects or features of the claims.

The present disclosure provides a computer-implemented method for determining a suitable augmentation of a training dataset and verification of the quality of such augmentation without requiring the training of any ML model. In other words, different candidate augmentation functions are scored based on a single offline pre-trained ML. The selected augmentation function can be applied to an existing training data, which can then be used to train the ML model. This is in contrast to conventional approaches wherein different sets of augmented data require to train a ML model and wherein the training data is selected based on the accuracy of the newly trained ML models.

The present disclosure provides for an improved generation of augmentation functions, and/or augmented datasets, that does not require extensive search, but rather exploits a model trained offline to quickly find the best augmentation function or the best set of augmentation functions.

According to a first aspect of the present disclosure, there is provided a computer-implemented method for generating a training dataset for training a machine learning, ML, model, the method comprising: determining an initial training dataset; determining a plurality of augmentation functions; applying each of the augmentation functions to the initial training dataset to obtain a plurality of augmented datasets; applying a pre-trained ML model to each of the plurality of augmented datasets to generate a plurality of feature vectors; comparing the feature vectors of each of the augmented datasets with feature vectors of the initial training dataset; based on the comparison, selecting at least one of the augmented functions for augmenting the initial training data to generate training data for training the ML model.

Comparing each of the augmented datasets to the initial training dataset may comprise determining a difference between each of the augmented datasets and the initial training sets.

The one or more augmentation functions may be randomly determined or predetermined.

The initial training dataset may represent one or more data points, and each one of the augmentation functions may include one or more transformations of the data points.

The transformations may be associated with one or more hyperparameters configuring the transformation. The at least one hyperparameter of the one or more hyperparameters may specify the magnitude of the transformation, and/or the probability of application of the transformation.

In one embodiment of the invention, the method may further comprise:
comparing each of the augmented datasets with a reference dataset; and selecting one of the augmented functions based on the comparisons of the feature vector of the augmented datasets with the feature vector of the initial training dataset and the feature vector of the reference dataset.

The reference dataset may be or may include a subset of the initial training dataset, and/or the reference dataset may be a validation dataset used for validating the trained ML model.

In one embodiment of the invention, the method further comprises: ranking the augmentation functions based on a first difference between each of the augmented datasets with the initial training dataset and/or a second difference between each of the augmented datasets and a reference dataset; and selecting one of the augmentation functions for generating training data for training the ML model based on the ranking.

The ranking may be based on a difference or ratio between the first and second differences.

Comparing the feature vectors of each of the augmented datasets with feature vectors of the initial training dataset may comprise measuring the distance between the augmented dataset and the initial training dataset, wherein selecting at least one of the augmented functions for augmenting the initial training data to generate training data for training the ML model may be based on a predetermined distance measure. The predetermined distance measure may contribute to guiding the selection of a good augmentation function.

The selected augmentation function is the function to generate the augmented training dataset with the minimum distance from the predetermined distance measure. In other words, the predetermined distance may be interpreted as an optimal distance between the initial data set and the augmented dataset. Thus, augmented datasets whose distance from the initial training dataset is closer to the predetermined distance may be better augmented datasets for ML model training. In some cases, the predetermined distance may be used to select more than one augmented dataset, for example by limiting the selection to augmented datasets whose distance from the initial training dataset may be within a given range.

In another embodiment, the predetermined distance measure may be derived by dividing the initial training dataset in data subsets; deriving a feature vector for each of the data subsets using the pre-trained ML model mentioned above or another, second pre-trained ML model; computing the pairwise distance between the feature vectors of the data subsets; and determining the predetermined distance based on the pairwise distances computed.

The initial training dataset may be divided into subsets such that each subset includes a single data item. Additionally, or alternatively, the initial training dataset may be divided into subsets such that each subset includes a respective different class of data items, in particular different classes of objects such as objects represented by image data. The predetermined distance may be determined as the minimum or average distance between the pairwise distances computed.

Alternatively, the difference between subsets in a reference training data set (rather than in the initial training data set) may be determined.

According to another aspect of the present disclosure, there is provided a system comprising one or more processing devices and a memory storing instructions which, when executed by the processing devices, cause the computer-implemented method as described above to be performed.

According to another aspect of the present disclosure, there is provided a computer program product for loading into a memory of a computer, comprising instructions, that, when executed by a processor of the computer, cause the computer to execute the computer-implemented method as described above.

### Brief Description of the Drawings

The features, objects, and advantages of the present disclosure will become more apparent from the detailed description set forth below when taken in conjunction with the drawings in which:
Fig.1 is a schematic illustration of the application of an augmentation function to a training dataset.
Fig. 2 illustrates a flow chart of a method for determining the augmentation function to be applied to a training set.
Fig. 3 illustrates an example of selection of an augmentation function based on an optimal distance.
Fig. 4 illustrates a schematic block diagram of a device for determining the augmentation function to be applied to a training dataset.

### Detailed Description of Exemplary Embodiments

The present disclosure provides new methods, systems and devices for augmenting training sets and validation sets of machine learning systems.

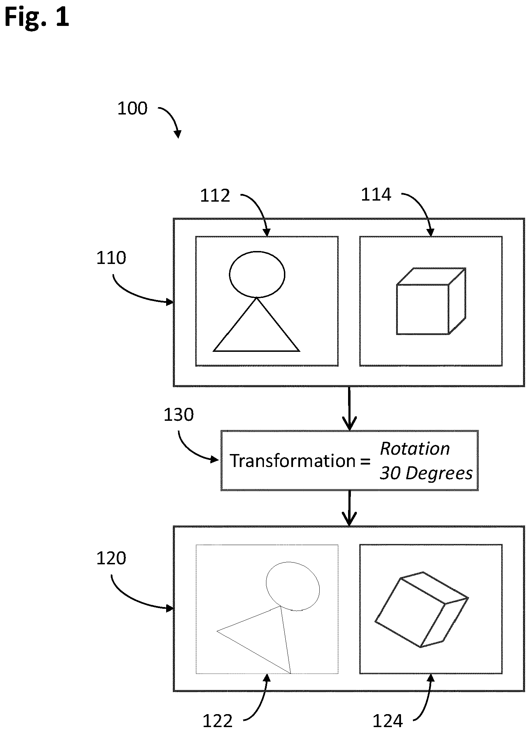

Fig. 1 illustrates the application 100 of an augmentation function to the images of an initial training dataset to generate new augmented images of an augmented dataset. Fig. 1 includes an initial training dataset 110 that may include a plurality of images including a first image 112, and a second image 114. It is also understood that the initial training dataset 110 may include any number of additional images that are not illustrated in Fig. 1.

Fig. 1 also includes an augmentation function 130 that may include a rotation transformation of a magnitude of 30 degrees. The transformation may be applied to the image of the initial training dataset 110 resulting in the generation of an augmented dataset 120. The augmented dataset 120 may include a plurality of images including a first image 122, which may be the result of the application of the transformation to image 112, and a second image 124 that may be the result of applying the transformation to image 114.

The augmentation function 130 is configured to perform a single graphical transformation, such as a rotation having a magnitude of 30 degrees. More generally, transformations included in augmentation functions may include indications of one or more magnitudes that determine how to perform the transformation. For example, transformation 130 includes a single magnitude parameter, however a 3D rotation may include three magnitude parameters: one for each one of the three dimensions. In other embodiments application functions may include multiple transformations such as a rotation and a change of colour. In some embodiments, the application function may include a probability associated with the application of transformations, so for example a first rotation with a given magnitude and a probability p1 of being applied, and a second transformation that may modify the colour or the illumination of the picture with a probability p2 of being applied.

Magnitudes, probabilities and other parameters that may apply to augmentation functions, such as number of transformations included, may be considered as hyperparameters of the data augmentation process.

Ultimately, an augmentation function may include one or more data transformations that may be determined by hyperparameters. Thus, the problem of finding the best augmentation function includes both the problem of finding the best sequence of data transformations, and the problem of determining the values of the hyperparameters that configure the selected data transformations or that determine the probability that the data transformation is applied.

For simplicity of explanation, only a limited number of transformations are described in this disclosure: however, the type and number of transformations may be unbounded. Furthermore, although, for ease and consistency the disclosure refers exclusively to augmentation functions in the field of image processing, the disclosed methods and apparatus apply more broadly to any domain including domains in biology or natural language processing. For example, whenever the description relates to the exemplary recognition of objects in an image and image transformation, the same examples may be reformulated to relate to the recognition and/or transformation of amino acids or bacteria or any other biology data, or of syntactic or semantic structures natural language processing. Indeed, the disclosed method and apparatus apply to any domain to which ML training and processing can be applied, and for which augmentations functions could be defined.

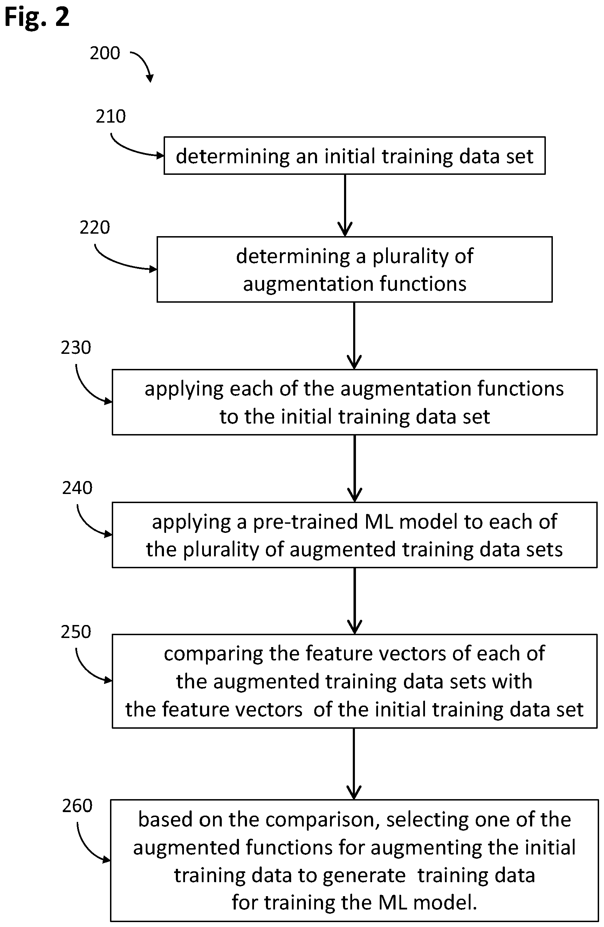

Fig. 2 shows a flow chart 200 of a method for determining the best augmentation function to apply to a training dataset.

In step 210 an initial training dataset, such as the initial training dataset 110 of Fig. 1, is determined. This initial training dataset may include all training data available, or just a subset of the available data including one or more data points, such as the exemplary images 112 and 114 of Fig. 1.

Optionally, a reference dataset may be derived either from the training data or from the validation and/or test data. The reference dataset may be used to validate the augmentation in step 250.

In step 220, an initial dataset of augmentation functions is selected. The determination of these augmentation functions may also include the determination of the range of the hyperparameters that configure the augmentation functions. In some embodiments, the initial dataset of the plurality of augmentation functions and hyperparameters may be randomly determined. Alternatively, the plurality of augmentation functions may be predetermined; or otherwise determined.

In step 230, a selection of the augmentation functions is applied to the initial training dataset to obtain a plurality of augmented datasets. An example of an application of augmentation functions is shown in Fig. 1. The application of the augmentation functions includes the determination of the hyperparameters that configure the application of the transformations in the augmentation function.

In step 240, a pre-trained model ML model is applied to the each of the plurality of augmented datasets. The pre-trained model may be any ML model operable to determine a feature vector for any augmented dataset.

The feature vector may be a multi-dimensional numerical vector, where each numerical value provides an indication of the presence of a feature in the data points of a dataset. In the case of datasets including multiple images, a feature may indicate whether an image displays an object of a given class, such for example a car, a person, or a motorcycle. Features may also be abstract characteristics of the image such as an impression of tranquillity or erratic movement. In some cases, the numerical value may indicate the probability that a feature is depicted in the image. More generally the numerical values may specify to what extent a specific feature is present in the image. For example, the numerical value may indicate to what extent a shape, such an exemplary round shape, is clearly present in an image and to what extent that shape may for example indicate a wheel of a car. Analogously, the feature vector of a set of images may provide an indication of how much the images depict a specific feature.

In some embodiments, the pre-trained model may be trained on the initial training dataset, or the pre-trained model may be trained on some subset of the training dataset. The pre-trained model may also be trained on a different training dataset.

The pre-trained model should generate feature vectors that differentiate between the different augmented sets. This differentiation should enable the distinction between augmented sets that may enrich the initial training dataset, and augmented sets that include poor augmentations. Poor augmentations may be caused by the inclusion in the augmented dataset of data that is too similar to the data already present in the initial training dataset; or poor augmentations may be caused by the introduction of data that is semantically too different from the data in the initial training dataset. In the field of image processing, augmented images may be semantically too different from the original, non-augmented images, when the objects that are recognizable in the non-augmented images are no longer recognizable in the augmented image.

Therefore, the generated feature vectors should be robust to the different augmentations and preserve semantic information of the data. In other words, augmented sets that include data that is semantically similar should result in similar feature vectors; while augmented sets that include data that is semantically very different, should result in feature vectors that are very different.

In some embodiments, the pre-trained model may be an ML model trained through Self-Supervised Learning (SSL). SSL tends to generate robust models, thus models that may generate similar feature vectors from similar augmented datasets. Furthermore, SSL facilitates learning because it does not require any hand-labelled data.

An advantage of using pre-trained ML models during search is that they remove the need for training models during search. The benefit of this approach is saving on time and compute power compared to other methods that rely on training multiple ML models during the search process. Furthermore, this approach does not require the training of a model specifically for the desired augmentation task. Rather, any available pre-trained model may be utilized as long as it generates robust feature vectors. Additionally, a pre-trained model may provide a way to evaluate the quality of the augmentations thus leading towards the selection of improved augmentations.

In step 250, the feature vectors of the generated augmented datasets are compared with the feature vector of the initial training dataset. The latter feature vector may also be derived using the pre-trained ML model. This comparison results in a distance measure that may indicate how different the generated augmented dataset is from the initial training dataset. The distance measure may be numerical value that can be determined based on any suitable distance metric in a multi-dimensional space. In some embodiments, the derivation of a distance measure between an augmented dataset and the initial training dataset may be computed by measuring the distances between feature vector of the initial training dataset and the feature vector of the augmented dataset.

Optionally, in step 250, the feature vectors of the generated augmented datasets may be compared with the feature vector of the reference dataset using the same distance metric disclosed above.

In step 260, an augmentation function is selected to be used to generate new augmentations of the dataset. This selection process may be based on the distance measurements generated in step 250. The selection process should aim at selecting an augmented function that generates augmenting datasets that are as different as possible from the initial training dataset; but that also preserve the semantics of the initial training dataset. In other words, the augmentation function may modify aspects of the features in the data. But the augmentation function should not be so aggressive to remove features from the data. For example, in the field of image processing, an augmentation is acceptable when objects that are recognizable in the images of the initial training dataset are also recognizable in the images of the augmented dataset.

Given the considerations above, the selection of the "best" augmentation function, may depend on determining an "optimal distance" between the feature vector of the initial training dataset and the feature vector of an augmented dataset. The selected, "best", augmented dataset is the one that is closest to (and/or above/below) said optimal distance.

In some embodiments, the optimal distance may be any fixed predefined value. In some embodiments, the optimal distance may be an hyperparameter of the augmentation process. However, in some embodiments, the optimal distance may be determined automatically based on the distance between different data subsets within the initial training dataset. Specifically, the initial training dataset may comprise data relating to different classes of entities. For example, in image processing the initial training dataset may comprise image data depicting entities such as cars, persons, and other entities. Thus, the initial training dataset may be divided into data subsets, each of which containing only images of objects of one of these classes, in other words a first data subset containing only images of cars, a second data subset containing only images of person, and so on for all relevant classes.

The data subsets may be represented by a feature vector which can be determined by a pre-trained model that may be the pre-trained model discussed above or a different pre-trained model. Consequently, the distance between the feature vectors corresponding to the different subsets may be calculated. This calculation may result in a pairwise distance calculation where the distance for each data subset is measured against the other subsets.

The optimal distance may be determined as the minimum distance between different data subsets as determined above. In turn, the optimal distance as computed above may be used in step 260 to determine which augmentation function is selected. For example, the selected augmentation function may be the function with the distance from the initial training dataset that is the closest to the optimal distance.

The determination of the optimal distance is based exclusively on the initial training dataset, and a pre-trained ML model. Therefore, the determination of the optimal distance may be performed off-line in other words before the computation of the augmentations. Thus, the computation of the optimal distance does not increase the computation required to augment a dataset. Furthermore, since the optimal distance may be determined before the computation of the augmentations, from the point of view of the augmentation derivation process, the optimal distance may be considered as a predetermined parameter.

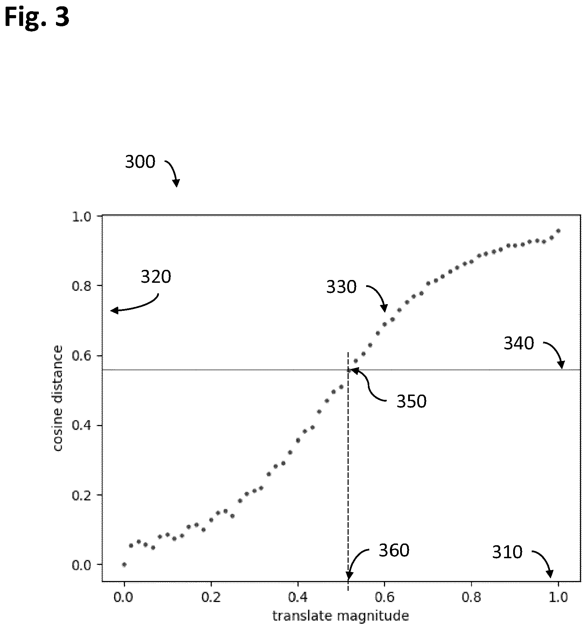

Fig. 3, shows an example of the process described above. In this example, all augmentation functions analysed include a translation transformation, however each augmentation function applies the transformation with a different magnitude. In the diagram 300, the X axis 310 shows the range of magnitudes of the translation transformation. In the example, the translation magnitudes range between 0 and 1. More generally, the range on the X axis may be any numeric range, or it can be a range that is rescaled and/or normalized according to any function that may be deemed appropriate for the specific graph.

The Y axis 320 shows the range of distances normalized through a cosine distance function. The normalization is just exemplary, in general any numeric range may be used as well as any normalization function and/or rescaling function that may be deemed appropriate for the specific graph.

The points 330 indicate the corresponding distance measures between each of the augmentation functions and the initial training dataset. These distance measures are normalized consistently with the normalization of the Y axis.

Line 340 represents the optimal distance value, and consistently point 350 represents the optimal combination of translation magnitude. Therefore, the optimal magnitude is a value indicated by point 360. In other words, the selected, "best" augmentation function has a magnitude value between 0.4 and 0.6.

The example above shows that once the optimal distance is identified, the corresponding hyperparameters may be also identified. Indeed, it is enough to identify the hyperparameters required to generate the values selected using the optimal distance. Thus, the optimal distance may provide the information required to select the optimal or near optimal hyperparameters' values even in case of a prohibitively large search space. Crucially, this result requires minimal computational costs because, as discussed above, the computation of the optimal distance is performed offline, thus it does not affect the computational cost of the search for the augmentation function.

In some embodiments, instead of, or in conjunction to, extracting the optimal distance and performing the selection of the best augmentation function on this distance, the selection of the best augmentation function may be performed by combining a first distance measure between the feature vector of the augmented dataset from the feature vector of the initial training dataset, and a second distance measure between the feature vector of an augmented dataset from the feature vector of the reference dataset.

In dese embodiments, the augmentation function that is selected should be the augmentation function that maximizes the distance from the initial training dataset, while it minimizes the distance from the reference dataset. In other words, this augmentation function tends to introduce the maximal differentiation of training images, while reducing the risk that the augmented dataset does not preserve the semantics of the initial training dataset got example by removing essential features by minimizing the distance from the reference dataset.

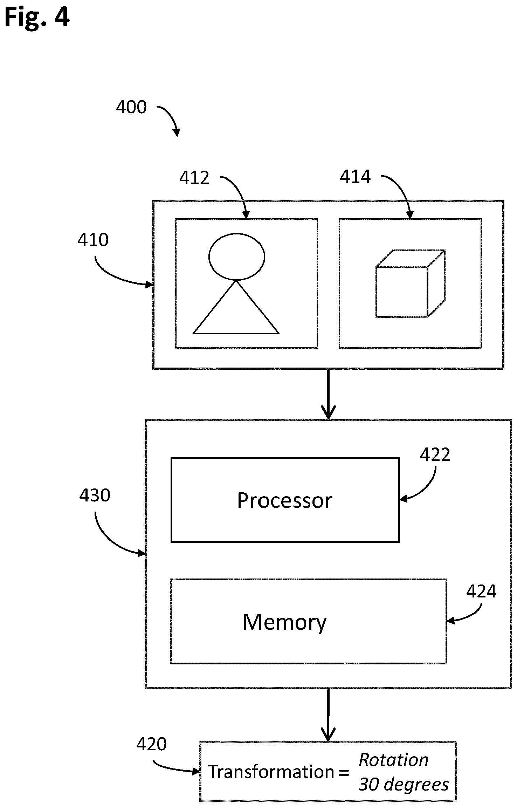

Fig. 4 illustrates a schematic block diagram of a device 430 for determining the scale of a model according to an embodiment of the present disclosure. The device 430 comprises at least one processor 422 and a memory 424. The memory 424 can be any type of memory. The processor 302, and memory 304 are communicatively coupled with one another.

The memory 424 stores instructions and a training dataset that may include the exemplary image 410, which may be equal to the image 110. that, when executed by the processor 422, result in the execution, at least in part, of a method 200 as described above. The execution of method 200 may result in the determination of an augmentation functions, such as the exemplary augmentation function 420.

## Claims

1. A computer-implemented method for generating a training dataset for training a machine learning, ML, model, the method comprising:
determining an initial training dataset;
determining a plurality of augmentation functions;
applying each of the augmentation functions to the initial training dataset to obtain a plurality of augmented training datasets;
applying a pre-trained ML model to each of the plurality of augmented training datasets to generate a plurality of feature vectors, and a feature vector of the initial training dataset;
comparing the feature vectors of each of the augmented training datasets with feature vectors of the initial training dataset;
based on the comparison, selecting at least one of the augmentation function for augmenting the initial training data to generate training data for training the ML model.

2. The method of claim 1, wherein comparing each of the augmented training datasets to the initial training dataset comprises determining a distance between the feature vectors of each of the augmented training datasets and the feature vector initial training set.

3. The method of claim 1 or 2, wherein one or more of said augmentation functions are randomly determined or predetermined.

4. The method of any preceding claim, wherein the initial training dataset represents data points, and wherein each one of the augmentation functions includes one or more transformations of the data points.

5. The method of claim 4, wherein each of the transformations is associated with one or more hyperparameters configuring the transformation.

6. The method of claim 5, wherein at least one hyperparameter of the one or more hyperparameters specifies a magnitude of the transformation, and/or a probability of application of the transformation.

7. The method of any preceding claim, further comprising:
comparing each of the augmented training datasets with a reference training dataset; and
selecting one of the augmentation function based on the comparisons of the feature vector of the augmented training datasets with the feature vector of the initial training dataset and the feature vector of the reference training dataset.

8. The method of claim 7, wherein the reference dataset is or includes a subset of the initial training dataset, and/or wherein the reference dataset is a validation dataset used for validating the trained ML model.

9. The method of any preceding claim, further comprising:
ranking the augmentation functions based on a first difference between each of the augmented training datasets with the initial training dataset and/or a second difference between each of the augmented training datasets and a reference training dataset; and
selecting one of the augmentation functions for generating training data for training the ML model based on the ranking.

10. The method of claim 9, wherein the ranking is based on a difference or ratio between the first and second differences.

11. The method of any one claims 2 to 10,
wherein selecting at least one of the augmentation function is based on a predetermined distance measure.

12. The method of claim 11, wherein the selected augmentation function is the function to generate the augmented training dataset with the minimum distance from the predetermined distance measure.

13. The method of claim 11, further comprising
dividing the initial training dataset in data subsets;
deriving a feature vector for each of the data subsets using the or a second pre-trained ML model;
computing the pairwise distance between the feature vectors of the data subsets; and
determining the predetermined based on the pairwise distances computed.

14. A system comprising one or more processing devices and a memory storing instructions which, when executed by the processing devices, cause the computer-implemented method of any preceding claim to be performed.

15. A computer program product for loading into a memory of a computer, comprising instructions, that, when executed by a processor of the computer, cause the computer to execute the computer-implemented method of any of claims 1 to 13.
